# EUROPEAN PATENT SPECIFICATION

(11) **EP 1 233 498 B1**
(45) Date of publication and mention of the grant of the patent: **22.03.2006**
(21) Application number: 01306373.0
(22) Date of filing: 25.07.2001
(51) Int. Cl.: H02K 3/28

(54) **Permanent-Magnet motor-generator with voltage stabilizer**
Permanentmagnetmotor-generator mit Spamumgsstabilisator
Moteur-générateur à aimant permanent comprenant un régulateur

(30) Priority: 20.02.2001 JP 2001043103
(43) Date of publication of application: 21.08.2002
(73) Proprietor: Kawamura, Hideo, Kouza-gun, Kanagawa-ken 253-0105 (JP)
(72) Inventor: Kawamura, Hideo, Kouza-gun, Kanagawa-ken 253-0105 (JP)
(74) Representative: Jenkins, Peter David

(56) References cited:
- EP-A- 1 037 365
- EP-A- 1 071 193
- FR-A- 2 791 485

## Description

The present invention relates to a motor-generator, which is comprised of a rotor of permanent-magnet pieces supported for rotation in a stator housing, a stator surrounding around an outside periphery of the rotor, and magnet coils arranged at axially opposing ends of the stator, each to each end, to keep a voltage steady.

Modern advanced permanent magnets of high performance have become much employed on a rotor of a motor-generator. Moreover, as the motor-generator having the rotor structure of permanent magnets is high in efficiency of electromechanical energy conversion and simple in construction, its use has recently grown in industrial machines and instruments of various kinds. Then, much research and development have continued to make the motor-generator compact or slim in construction, with even high performance and high power output, and correspondingly necessitated a diversity of parts and components.

In order to increase a torque at low speed in operation of the conventional motor-generator, it is effective to increase the strength of the magnetic field of the stator around the rotor, thereby raising the torque. With the motors, thus, increasing well the torque causes the increase of electromotive force at a low speed, contributing to the provision of commercially viable power source for machines. Among the rotating machinery employing the permanent-magnet rotor is, for example a permanent-magnet rotating machine disclosed in Japanese Patent Laid-Open No. 272850/1987. The prior permanent-magnet rotating machine has a rotor in which permanent magnets are arranged and containers are provided to contain therein magnetic material that is allowed to flow radially owing to the revolution of the rotor to thereby form magnetic pole pieces.

Moreover, another prior art of an a-c motor-generator capable of developing a high-power output is disclosed in Japanese Patent Laid-Open No. 236260/1995, in which a magnetic flux density is controlled in proportion to the speed in revolutions per minute (rpm) of the rotor to adjust properly an amount of the generated amperes or voltages. A control ring is arranged between the rotor and the stator for rotation relatively of them and further a permeable member is provided in such a manner as to come in and out contact with the control ring.

Further disclosed in Japanese Patent Laid-Open No. 261996/2000, which is co-pending application of the present inventor, is a high-torque motor-generator in which the permeable member is made of amorphous alloys to allow the magnetic forces to pass effectively through the small spaces, thereby increasing the torque at low speed in rpm of the rotor. The prior motor-generator is comprised of permeable members arranged in juxtaposition around a rotor shaft with nonmagnetic members being each interposed between any two adjoining permeable pieces, a magnetic path core arranged surrounding the outside periphery of the permeable members, platy permanent-magnets arranged around the outside periphery of the magnetic path core, and nonmagnetic reinforcing member fixed on the outside periphery of the permanent-magnets.

In the meantime, as most automotive electric equipments are designed to require either 12V or 24V, the automotive alternators need to have the generation characteristic capable of feeding the electric power matching to the voltage recited just above. Nevertheless, the d-c power of either 12V or 24V is too low to operate other industrial machinery such as auxiliaries mounted on an automobile, in which much power is required for their operation, thus apt to be much subject to transmission loss in the associated wiring. Moreover, a major problem exists in which too thick in cross section of conductor is necessitated for windings and wirings. To cope with this, the alternator is needed producing not only the electric power of low voltage matching to the voltage required for the automotive electric equipments but also another electric power having high tension adapted to energize the auxiliaries, industrial appliances, and so on. The high tension of the generated electric power reduces the transmission loss in the wiring, rendering the conductor such as windings thin in cross section, thereby making the alternator itself compact or slim in construction.

With the permanent-magnet motor-generator, the permanent magnet is fixed in magnetic flux density and accordingly unchanged in magnetic force, either at low speed or high speed. Nevertheless, the voltage and correspondingly the output of the motor-generator rises in proportion to the increase of the rpm of the rotor. Thus, the motor-generator designed to produce the desired output voltage when the rotor is at low speed comes to yield too high voltages to control them properly. As opposed to the event stated just earlier, the way to raise the output voltage at a low speed needs to either make the permanent magnet large in size or increase the current and also increase the number of loops or turns in the winding to intensify the strength of the magnetic field at the stator side with the result of yielding great torque. However, the output voltages at the high speed also become too high to control them adequately. To increase the torque in the motor-generator, moreover, it is needed to make the conductor wound on the stator core heavy in cross section to carry large current, thereby intensifying the magnetic force in the stator.

It is a primary aim of the present invention to overcome the problems stated earlier and to provide a motor-generator having a voltage stabilizer, in which windings laid in slots of a stator core are grouped into more than one winding set that are connected in series and/or parallel to continue producing a desired output voltage independently of the variations of the rotor speed in rpm, and further in which a cylindrical magnetic path extends axially of the rotor in opposition to electromagnet coils arranged at axially opposing ends of the rotor, each to each end, and conduction to the electromagnet coils is controlled in such a manner as to intensify magnetic force in permanent-magnet pieces when the output voltage is low while weaken the magnetic force when the output voltage is high, thereby always ensuring the desired output voltage.

The present invention is concerned with a motor-generator with a voltage stabilizer, comprising a multipolar permanent-magnet rotor mounted on a rotor shaft supported for rotation in a stator housing, a stator fixed to the housing and arranged around the rotor, and electromagnet coils fixed to axially opposing ends of the housing, each to each end, in opposition to axially opposing ends of the rotor, wherein the rotor is composed of a cylindrical magnetic path arranged around the rotor shaft and extended axially to areas confronting the electromagnet coils, a permeable member surrounding around the cylindrical magnetic path, and a permanent-magnet member of more than one permanent-magnet piece extended axially and arranged circumferentially around an outside periphery of the permeable member with N- and 5-poles on either piece alternating in polarity circularly around the rotor, and wherein the cylindrical magnetic path includes an N-pole annular portion arranged confronting any one of the electromagnet coils, N-pole electromagnet magnetic paths stemming from the N-pole annular portion in opposition to the N-poles of the permanent-magnet pieces, an S-pole annular portion arranged confronting another of the electromagnet coils, and S-pole electromagnet magnetic paths stemming from the S-pole annular portion in opposition to the S-poles of the permanent-magnet pieces, the N-pole and S-pole electromagnet magnetic paths alternating in polarity circumferentially with nonmagnetic pieces being each interposed between any two adjacent electromagnet magnetic paths.

In an aspect of the present invention, a motor-generator is disclosed in which around the outside periphery of the permanent-magnet member there is provided a first reinforcing member to keep the permanent-magnet member against falling off the rotor owing to a high centrifugal force, the reinforcing member being made of high tensile carbon fibers of a core material, which is impregnated with molten aluminum then, followed by solidification.

In another aspect of the present invention, there is disclosed a motor-generator in which both the N-pole and S-pole electromagnet magnetic paths are encircled with a second reinforcing member to be formed in an overall cylindrical configuration.

In another aspect of the present invention, a motor-generator is disclosed in which nonmagnetic members of a material tough to pass the magnetic force, such as aluminum, copper alloys, resinous material, and austenite steel, are filled in between any tip of the N-pole electromagnet magnetic path and the 5-pole cylindrical portion and also between any tip of the S-pole electromagnet magnetic path and the N-pole cylindrical portion, and a clearance between any adjacent N-pole and S-pole electromagnet magnetic paths is made larger in distance than a sum of an air gap between the rotor and the stator and a clearance between the magnetic permeable member and the rotor.

In another aspect of the present invention, a motor-generator is disclosed in which molten aluminum or resinous material of heat-resistant property is charged in any clearance between any two adjacent permanent-magnet pieces and also any clearance between any adjacent N-pole and S-pole electromagnet magnetic paths.

In another aspect of the present invention, a motor-generator is disclosed in which the stator is comprised of a stator core with stator teeth arranged spaced circumferentially apart from each other to separate any two adjacent stator slots, and windings wound on stator teeth with spanning some stator slots so as to be substantially equal out of phase, and wherein the windings are each grouped into more than one winding set shifted from each other to form three-phase wye-connections, which are allowed to be connected either in series or in parallel, so that a controller selectively changes over among output terminals led out of the connections every winding set, thus producing a desired output power in accordance with a rpm of the rotor.

In a further another aspect of the present invention, a motor-generator is disclosed in which the stator windings are grouped into low-voltage winding sets and high-voltage winding sets, and the controller regulates magnetic flux to produce two types of power, which are different in rated voltage. Moreover, the low-voltage winding sets and the high-voltage winding sets are connected in parallel to give a generation characteristic of low-voltage, large-current.

In another aspect of the present invention, a motor-generator is disclosed in which the controller serves connecting in series the output terminals led out of the connections in response to an event where the engine or rotor is low in rpm, and reducing the number of the connections made in series as the rpm raises, thereby to ensure the desired output voltage kept always constant irrespective of variation in the rpm.

In another aspect of the present invention, a motor-generator is disclosed, in which with the rotor being operated in a preselected rpm range, the controller in response to the event where the output terminals are connected to provide the output of low voltage, makes the electromagnet coils conductive in a direction to increase the N-pole magnetic force, whereas in response to another event where the output is high in voltage, makes the electromagnets conductive in a reverse direction to decrease the N-pole magnetic force, thereby providing the desired output voltage kept always constant. Moreover, the controller includes a rectifier where a produced power of the desired voltage is rectified to a d-c, and an inverter yielding an a-c of a desired frequency.

In a further another aspect of the present invention, a motor-generator is disclosed in which the controller makes the electromagnet coils conductive in a manner to reduce the magnetic force of the permanent-magnet member when the motor-generator is used as a motor.

With the motor-generator constructed as stated earlier, the desired constant voltage may be ensured irrespective of variations in rpm of the rotor. Thus, the produced voltage may be controlled properly without going too high even at high speed. Most automotive electric systems need, for example the power of about 0.5KW ~ 1KW at the voltages of 12V~28V, whereas the auxiliariesor industrial equipment mounted on the automobile need the power of about 2KW~3KW. If someone could get the voltages of 12V ~ 28V to cover the power of about 2KW~3KW for the auxiliaries, the current value would become too large, thus causing power loss with much heating. As opposed to the condition stated earlier, the auxiliaries or auxiliary equipment is allowed to operate on the high tension of about 100V~200V, thus involved in no problem of power loss in the wiring. Accordingly, the winding adapted to produce the high tension supplied to the auxiliaries, for example is allowed to make slender or thin the conductor in cross section, thereby contributing to rendering the generator slim in construction and light in weight. Besides, when any relay is used, the voltage may be more increased with the result of less current, thus protecting any contact against possible fusion.

With the motor-generator according to the present invention, simply connecting in series and/or in parallel the terminals of the windings in the winding sets is sufficient to produce the desired voltage, either at high speed or at low speed, thus, helping ensure always the proper voltage control.

According to the present motor-generator in which the electromagnet coils are arranged at the axially opposing ends of the stator, each to each end, while the permeable member extends outside the axially opposing ends of the rotor to areas confronting the electromagnet coils, when the rotor operates in the preselected rpm range, the controller in response to the event where the output terminals are connected to provide the output of low voltage, makes the electromagnet coils conductive in a direction to increase the N-pole magnetic force, whereas in response to another event where the output is high in voltage, makes the electromagnets conductive in a reverse direction to decrease the N-pole magnetic force, thereby providing the desired output voltage kept always constant.

Embodiments of the present invention will now be described by way of example only, with reference to the accompanying drawings, in which:-
FIG. 1 is an axial sectional view showing a preferred embodiment of a motor-generator with a voltage stabilizer in accordance with the present invention:
FIG. 2 is a cross-sectioned view of the motor-generator of FIG. 1 taken on the plane I - I of that figure:
FIG. 3 is a perspective view illustrating a cylindrical magnetic path used in the motor-generator of FIG. 1:
FIG. 4 is a fragmentary enlarged section showing a part encircled with a curved line B of FIG. 2:
FIG. 5 is a wiring diagram explaining an example of circuit connection of the winding sets in the motor-generator of FIG. 1:
FIGS. 6(A) and 6(B) are wiring diagrams explaining other examples of circuit connection of the winding sets in the motor-generator of FIG. 1: and
FIGS. 7(A) and 7(B) are graphic representations showing rpm vs. output voltage produced by the motor-generator shown in FIG. 1:

A motor-generator with a voltage stabilizer in accordance with the present invention will be hereinafter described with reference to the accompanying drawings.

The present motor-generator is suitable for use, for example in the generators combined with an automotive engine mounted on vehicles such as automobiles and so on, generators incorporated in an engine for cogeneration system, generators attached to an output shaft of an engine for a hybrid vehicle, generators for supplying electric power to a heater in the diesel particulate filters mounted on vehicles, generators combined with a turbocharger to reclaim heat energy from exhaust gases, or generators mounted to energy recovery means.

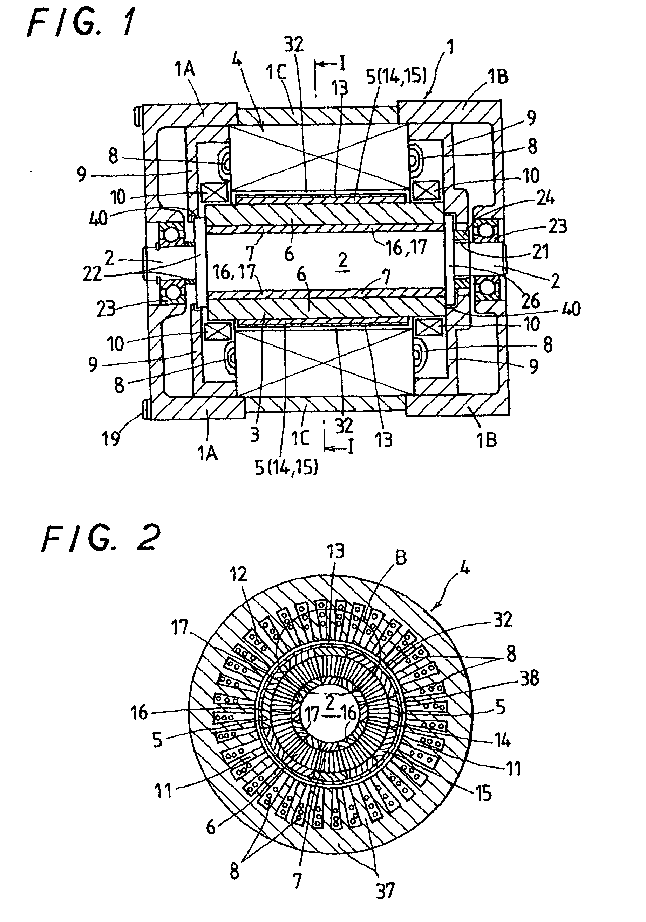

The motor-generator of the present invention, as shown in FIG. 1, is comprised of a stator housing 1 of a pair of housing halves 1A and 1B and an intermediate housing 1C fastened together with clamping bolts 19, a rotor shaft 2 supported for rotation in the housing halves 1A and 1B by means of a pair of axially opposite ball bearings 23, a rotor 3 of a multipolar permanent-magnet member 5 in which more than one platy permanent-magnet piece 15 is arranged circumferentially around the rotor shaft 2 at a regular interval and fixed to the rotor shaft 2, a stator 4 arranged around the outer periphery of the rotor 3 to define an air gap 32 between them and fixed to the housing halves 1A and 1B, and electromagnet coils 10 arranged in opposition to the axially opposite ends of the rotor 3, each to each end, and fixed to the housing halves 1A, 1B at the axially opposite sides of the stator 4.

The rotor 3 is accommodated for rotation in a cylindrical hollow inside the stator 4 fixed to the housing halves 1A, 1B, with keeping the air gap 32 of a preselected radial clearance. The rotor 3 is clamped between axially opposite backing plate 22 and retainer plate 26, which are abutted against axially opposing ends of the rotor 3, each to each end, and kept on the rotor shaft 2 against rotation by tightening a fixing nut 24 on a threaded end 21 of the rotor shaft 2. A motor-generator pulley fixed to any one end of rotor shaft 2 with a nut is connected through a belt to a rotating shaft, turbine shaft and so on, which are connected to the engine through any transmission system. The rotor 3 is composed of a cylindrical magnetic path 7 arranged on the rotor shaft 2 and extended axially to areas confronting the electromagnet coils 10 on the rotor shaft 2, a magnetic permeable member 6 arranged around the cylindrical magnetic path 7, and the permanent-magnet member 5 of more than one permanent-magnet piece 15 extended axially and arranged circumferentially over the outside periphery of the magnetic permeable member 6 with nonmagnetic pieces 14 being each interposed between any two adjoining permanent-magnet pieces 15. It is also to be noted that the permanent-magnet pieces 15 are arranged in such a configuration that unlike poles, or N- and S-pole, alternate in polarity circularly around the rotor 3. Around the outside periphery of the permanent-magnet member 5 there is provided a first reinforcing member 13 to keep the permanent-magnet member 5 against falling off the rotor 3 owing to a high centrifugal force, the reinforcing member 13 being made of high tensile carbon fibers of a core material, which is impregnated with molten aluminum then, followed by solidification.

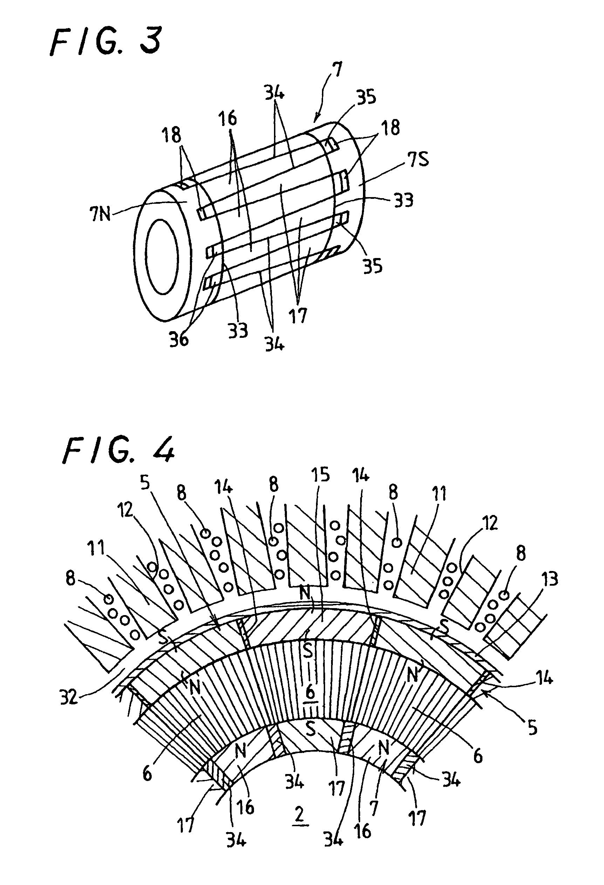

The cylindrical magnetic path 7, as shown particularly in FIGS. 3 and 4, includes an N-pole annular portion 7N arranged confronting any one of the electromagnet coils 10, N-pole electromagnet magnetic paths 16 stemming from the N-pole annular portion 7N in opposition to N-poles of the permanent-magnet pieces 15, an S-pole annular portion 7S arranged confronting another of the electromagnet coils 10, and S-pole electromagnet magnetic paths 17 stemming from the S-pole annular portion 7S in opposition to S-poles of the permanent-magnet pieces 15. The N-pole electromagnet magnetic paths 16 are circumferentially interdigitated with the S-pole electromagnet magnetic paths 17 with nonmagnetic members 34 being each interposed between any two adjacent N-pole and S-pole electromagnet magnetic paths 16 and 17. Both the N-pole and S-pole electromagnet magnetic path portions 7N and 7S are encircled with a second reinforcing member 33 to be formed in an overall cylindrical configuration. Moreover, nonmagnetic members 18 of a material tough to pass the magnetic force, such as aluminum, copper alloys, resinous material, and austenite SUS, are filled in between any tip 35 of the N-pole electromagnet magnetic path 16 and the S-pole cylindrical portion 7S and also between any tip 36 of the S-pole electromagnet magnetic path 17 and the N-pole cylindrical portion 7N. Besides, molten resinous material of heat-resistant property is charged in any clearance between any two adjacent permanent-magnet pieces 15 and also any clearance between any adjacent N-pole and S-pole electromagnet magnetic paths 16 and 17. The clearance between any adjacent N-pole and S-pole electromagnet magnetic paths 16 and 17 is made larger in distance than the sum of the air gap 32 between the rotor 3 and the stator 4 and the clearance between the magnetic permeable member 6 and a magnetic path 9 to thereby keep the magnetic flux against magnetic leakage.

As will be seen from FIGS. 2 and 4, the stator 4 is comprised of a toothed stator core 37 constructed of an outside cylindrical magnetic path 38 with stator teeth 11 arranged spaced circumferentially apart from each other to separate two adjacent stator slots 12, which open onto or near the air gap 32 kept between the outer periphery of the rotor 3 and the tooth tips, and windings 8 wound on stator teeth 11 with spanning some stator slots 12 so as to be substantially equal out of phase. Moreover, magnetic paths 9 are fixed to the housing halves 1A and 1B in opposition to the axially opposing ends of the stator 4, each to each end. The electromagnet coils 10 are mounted to their associated magnetic paths 9 to encircle the revolving magnetic permeable member 6. There is formed a magnetic path gap 40 between the inside periphery of any magnetic path 9 and the outside periphery of the rotor 3.

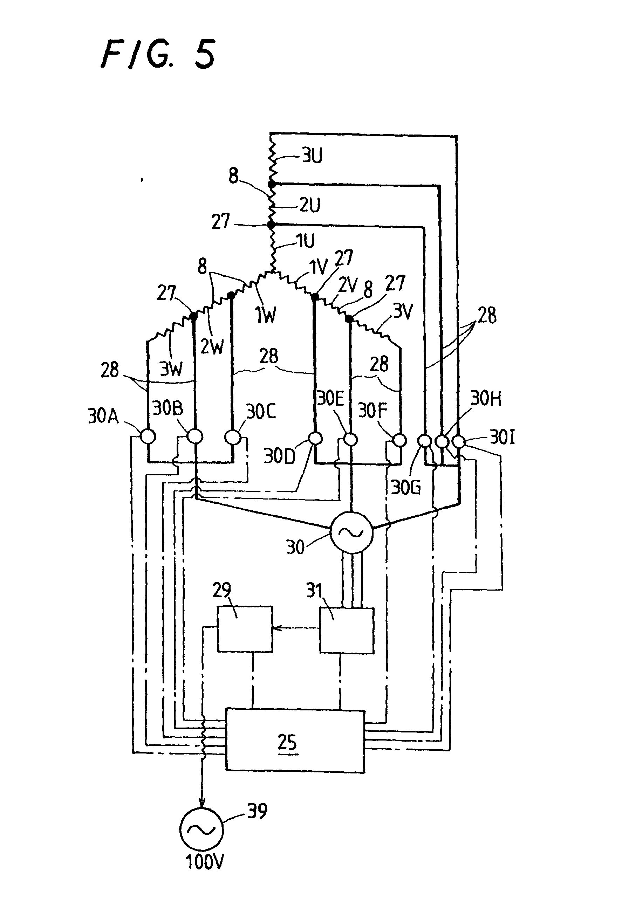

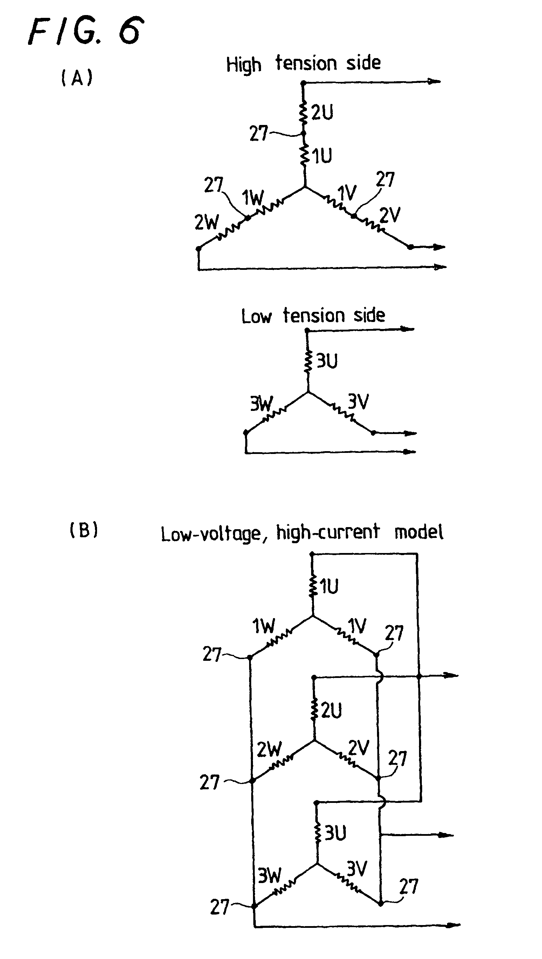

The windings 8 are each grouped into more than one winding set 1U-1V-1W, 2U-2V-2W and 3U-3V-3W that are divided circumferentially regarding the stator slots 12 of the stator core 37 and wound shifted from each other in the stator slot 12 to form three-phase wye-connections, which are allowed to be connected in series. With the permanent-magnet motor-generator constructed as stated earlier, the windings 8 belonging to any one winding set have terminals that make connections 27, refer to FIG. 5, where there are provided output terminals switched over in accordance with instructions of controller unit 25, so that any desired electric power varied depending on the rpm of the rotor may be produced. The windings 8 are grouped into, for example three winding sets as shown in FIG. 5: a first winding set (1U-1V-1W), second winding set (2U-2V-2W) and third winding set (3U-3V-3W). The windings 8 in any one winding set out of the three winding sets are wound spaced 120 electrical degrees apart to provide the three-phase system of windings helping ensure a preselected voltage. The controller unit 25 serves connecting the output terminals led out of the connections 27 either in series as in FIG. 5 or in parallel in FIG. 6(B) in response to an event where the engine or rotor 3 is low in rpm, thus reducing the number of the connections 17 made in series as the rpm raises, thereby to ensure the desired output voltage kept always constant irrespective of the varied rpm. Although but all the winding sets are shown earlier connected in series, it will be appreciated that the first and second winding sets are connected in series while only the third winding set makes another three-phase connection for the low-voltage side, as shown in FIG. 6(A).

With the rotor 3 being operated in a preselected rpm range, the controller unit 25 in response to the event where the output terminals are connected to provide the output of low voltage, makes the electromagnet coils 10 conductive in a manner flowing a current in the direction to increase the N-pole magnetic force, whereas in response to another event where the output is high in voltage, makes the electromagnets 10 conductive in a manner flowing a current in the direction to decrease the N-pole magnetic force, thereby providing the desired output voltage kept always constant. When the present permanent-magnet motor-generator is used as a motor, the controller unit 25 makes the electromagnet coils 10 conductive so as to decay the magnetic force of the permanent-magnet member 5.

The controller unit 25 is connected to the connections 27 among the winding sets through lines 28 and relays 30A, 30B, 30C, 30D, 30E, 30F, 30G, 30H and 30I. Thus, the controller unit 25 turns selectively on and/or off any selected from the relays 30A to 30I, thereby connecting selectively any of the winding sets in parallel and/or in series, or remaining alone to produce a three-phase a-c source 30. Thus, the controller unit 25, depending on the rpm of the rotor 3, makes not only conduction control to the electromagnet coils 10 but also on-off control of the switching relays to connect the winding sets in parallel and/or in series, thereby yielding the three-phase a-c source 30 of a desired a-c voltage. The controller unit 25 includes a rectifier 31 where the produced power of the desired voltage is rectified to a d-c of, for example 24V, and an inverter 29, yielding a three-phase a-c of 50 ~ 60Hz at 200V.

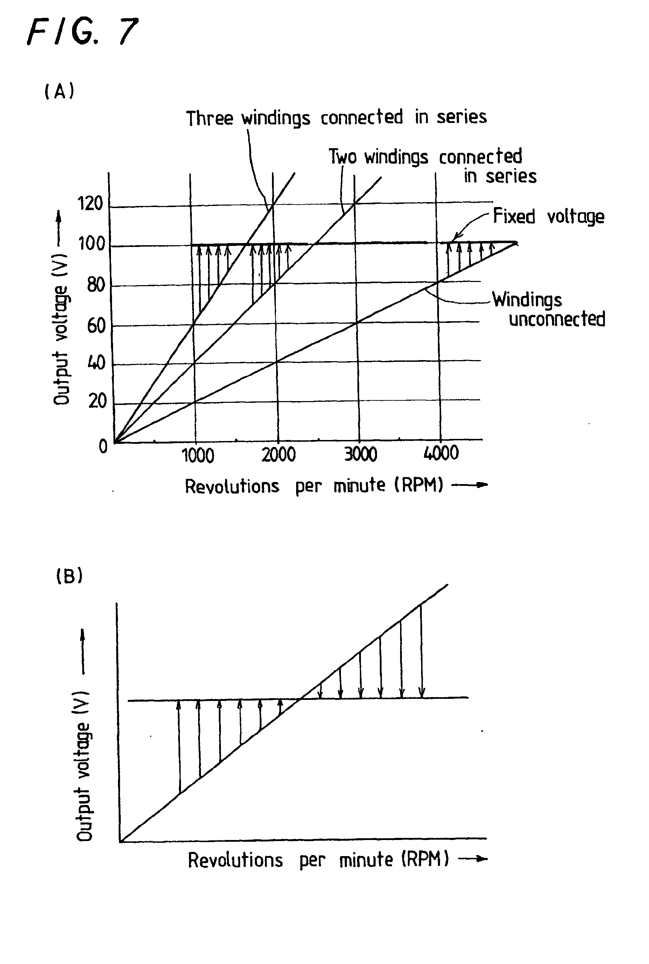

For instance, when the controller unit 25 turns on the relays 30C, 30D and 30G, while turns off the residual relays, all windings remain unconnected, thus producing an output voltage as shown in FIG. 7(A). When the relays 30B, 30E and 30H are turned on while other relays are turned off, any two windings come into series connection, thus producing another output voltage as shown in FIG. 7(A). Moreover, when the relays 30A, 30F and 30I are turned on while other relays are turned off, three windings are connected in series, thereby producing a further another output voltage as shown in FIG. 7(A). It is to be noted that all windings 8 are allowed to be connected in series as shown in FIG. 7(B). The controller unit 25, as stated just earlier, controls the on-off operation of the relays, depending on the rpm of the rotor 3, thereby realizing the output voltage (V) of fixed level as shown in FIG. 7(A). As an alternative, a low-voltage, large-current generator may be provided in which the windings 8 on the stator 4 are constructed in phase in matching with the number of pole of the permanent magnet on the rotor 3 and the winding sets 1U-1V-1W, 2U-2V-2W and 3U-3V-3W are connected in parallel.

## Claims

1. A motor-generator with a voltage stabilizer, comprising a multipolar permanent-magnet rotor(3) mounted on a rotor shaft(2) supported for rotation in a stator housing(1), a stator(4) fixed to the housing(1) and arranged around the rotor(3), and electromagnet coils(10) fixed to axially opposing ends of the housing (1), each to each end, in opposition to axially opposing ends of the rotor(3), wherein the rotor(3) is composed of a cylindrical magnetic path(7) arranged around the rotor shaft(2) and extended axially to areas confronting the electromagnet coils(10), a permeable member(6) surrounding the cylindrical magnetic path(7), and a permanent-magnet member(5) of more than one permanent-magnet piece(15) extended axially and arranged circumferentially around an outside periphery of the permeable member(6) with N- and S-poles on either piece alternating in polarity circularly around the rotor(3), and wherein the cylindrical magnetic path (7) includes an N-pole annular portion(7N) arranged confronting any one of the electromagnet coils(10), N-pole electromagnet magnetic paths(16) stemming from the N-pole annular portion(7N) in opposition to the N-poles of the permanent-magnet pieces(15), an S-pole annular portion(7S) arranged confronting another of the electromagnet coils(10), and S-pole electromagnet magnetic paths(17) stemming from the S-pole annular portion(7S) in opposition to the S-poles of the permanent-magnet pieces(15), the N-pole and S-pole electromagnet magnetic paths(16,17) alternating in polarity circumferentially with nonmagnetic pieces (34) being each interposed between any two adjacent electromagnet magnetic paths (16,17).

2. A motor-generator constructed as defined in claim 1, wherein around the outside periphery of the permanent-magnet member(5) there is provided a first reinforcing member(13) to keep the permanent-magnet member(5) against falling off the rotor(3) owing to a high centrifugal force, the reinforcing member(13) being made of high tensile carbon fibers of a core material, which is impregnated with molten aluminum then, followed by solidification.

3. A motor-generator constructed as defined in claims 1 or 2, wherein both the N-pole and S-pole electromagnet magnetic paths(16,17) are encircled with a second reinforcing member(33) to be formed in an overall cylindrical configuration.

4. A motor-generator constructed as defined in any one of claims 1 ~ 3, wherein nonmagnetic members (18) of a material tough to pass the magnetic force, such as aluminum, copper alloys, resinous material, and austenite steel, are filled in between any tip(35) of the N-pole electromagnet magnetic path(16) and the S-pole cylindrical portion(7S) and also between any tip(36) of the S-pole electromagnet magnetic path (17) and the N-pole cylindrical portion(7N), and a clearance between any adjacent N-pole and S-pole electromagnet magnetic paths(16,17) is made larger in distance than a sum of an air gap between the rotor(3) and the stator(4) and a clearance between the magnetic permeable member(6) and the rotor(3).

5. A motor-generator constructed as defined in any one of claims 1 ~ 4, wherein molten aluminum or resinous material of heat-resistant property is charged in any clearance between any two adjacent permanent-magnet pieces(15) and also any clearance between any adjacent N-pole and S-pole electromagnet magnetic paths (16,17).

6. A motor-generator constructed as defined in any one of claims 1 ~ 5, wherein the stator(4) is comprised of a stator core(37) with stator teeth(11) arranged spaced circumferentially apart from each other to separate two adjacent stator slots(12), and windings (8) wound on stator teeth(11) with spanning some stator slots(12) so as to be substantially equal out of phase, and wherein the windings(8) are each grouped into more than one winding set(1U-1V-1W, 2U-2V-2W, 3U-3V-3W) shifted from each other to form three-phase wye-connections, which are allowed to be connected either in series or in parallel, so that a controller(25) selectively changes over among output terminals led out of the connections(27) every winding set(1U-1V-1W, 2U-2V-2W, 3U-3V-3W), thus producing a desired output power in accordance with a rpm of the rotor(3).

7. A motor-generator constructed as defined in claim 6, wherein the stator(4) windings(8) are grouped into low-voltage winding sets and high-voltage winding sets, and the controller(25) regulates magnetic flux to produce two types of power, which are different in rated voltage.

8. A motor-generator constructed as defined in claim 7, wherein the low-voltage winding sets and the high-voltage winding sets are connected in parallel to give a generation characteristic of low-voltage, large-current.

9. A motor-generator constructed as defined in any one of claims 6 ~ 8, wherein the controller(25) serves connecting in series the output terminals led out of the connections(27) in response to an event where the engine or rotor(3) is low in rpm, and reducing the number of the connections made in series as the rpm raises, thereby to ensure the desired output voltage kept always constant irrespective of variation in the rpm.

10. A motor-generator constructed as defined in any one of claims 6 ~ 9, wherein with the rotor(3) being operated in a preselected rpm range, the controller(25) in response to the event where the output terminals are connected to provide the output of low voltage, makes the electromagnet coils(10) conductive in a direction to increase the N-pole magnetic force, whereas in response to another event where the output is high in voltage, makes the electromagnets conductive in a reverse direction to decrease the N-pole magnetic force, thereby providing the desired output voltage kept always constant.

11. A motor-generator constructed as defined in any one of claims 6 ~ 10, wherein the controller(25) includes a rectifier(31) where a produced power of the desired voltage is rectified to a d-c, and an inverter (29) yielding an a-c of a desired frequency.

12. A motor-generator constructed as defined in any one of claims 6 ~ 11, wherein the controller(25) makes the electromagnet coils(10) conductive in a manner to reduce the magnetic force of the permanent-magnet member(5) when the motor-generator is used as a motor.

## Patentansprüche

1. Motor-Generator mit Spannungsstabilisator, umfassend
einen multipolaren Permamentmagnetrotor (3), der auf einer Rotorwelle (2) befestigt ist, welche drehbar in einem Statorgehäuse (1) gelagert ist,
einen Stator (4), der an dem Gehäuse (1) befestigt ist und um den Rotor (3) angeordnet ist, und elektromagnetische Wicklungen (10), die gegenüber den axial entgegengesetzten Enden des Rotors (3) jeweils an axial entgegengesetzten Enden des Gehäuses (1) befestigt sind,
wobei der Rotor (3) umfasst: einen zylindrischen magnetischen Pfad (7), der um die Rotorwelle (2) angeordnet ist und sich axial bis zu Bereichen gegenüber den elektromagnetischen Wicklungen (10) erstreckt, ein permeables Bauteil (6), das den zylindrischen magnetischen Pfad (7) umgibt, und eine Permanentmagnetanordnung (5) aus mehr als einem Permanentmagnetstück (15), die sich in axialer Richtung erstreckt und rings um die Außenseite des permeablen Bauteils (6) angeordnet ist,
wobei N- und S-Pole in ihrer Polarität rings um den Rotor (3) abwechseln, und wobei der zylindrische magnetische Pfad (7) ein gegenüber einer der elektromagnetischen Wicklungen (10) angeordnetes N-Pol-Ringstück (7N), gegenüber den N-Polen der Permanentmagnetstücke (15) liegende N-Pol-Elektromagnet-Magnetpfade (16), die vom N-Pol-Ringstück (7N) stammen, ein gegenüber einer anderen der elektromagnetischen Wicklungen (10) angeordnetes S-Pol-Ringstück (7S), und gegenüber den S-Polen der Permanentmagnetstücke (15) liegende S-Pol-Elektromagnet-Magnetpfade (17), die vom S-Pol-Ringstück (7S) stammen umfasst, wobei die N-Pol- und S-Pol-Elektromagnet-Magnetpfade (16, 17) umlaufend in ihrer Polarität abwechseln und nichtmagnetische Stücke (34) jeweils zwischen zwei benachbarten Elektromagnet-Magnetpfaden (16, 17) vorgesehen sind.

2. Motor-Generator nach Anspruch 1, wobei ein erstes Verstärkungselement (13) um die Außenseite der Permanentmagnetanordnung (5) vorgesehen ist, um zu verhindern, dass die Permanentmagnetanordnung (5) aufgrund einer hohen Zentrifugalkraft vom Rotor (3) abfällt, und wobei das Verstärkungselement (13) aus sehr zugfesten Kohlefasern gemacht ist, und zwar aus einem Kernmaterial, welches mit geschmolzenem Aluminium imprägniert ist, gefolgt von Verfestigung.

3. Motor-Generator nach Anspruch 1 oder 2, wobei sowohl der N-Pol- als auch der S-Pol-Elektromagnet-Magnetpfad (16, 17) von einem zweiten Verstärkungselement (33) umgeben ist, so dass sich eine insgesamt zylindrische Anordnung ergibt.

4. Motor-Generator nach einem der Ansprüche 1 bis 3, wobei nichtmagnetische Elemente (18) aus einem Material, durch das die magnetische Kraft nur schwer hindurch dringt, wie zum Beispiel Aluminium, Kupferlegierungen, Kunstharzmaterial und Austenit-Stahl, zwischen jede Spitze (35) des N-Pol-Elektromagnet-Magnetpfads (16) und dem S-Pol-Zylinderstück (16), wie auch zwischen jede Spitze (36) des S-Pol-Elektromagnet-Magnetpfads (17) und dem N-Pol-Zylinderstück (17), gefüllt sind, und die Lücke zwischen allen benachbarten N-Pol- und S-Pol-Elektromagnetpfaden (16, 17) im Abstand größer ist als die Summe eines Luftspalts zwischen dem Rotor (3) und dem Stator (4) und einer Lücke zwischen dem magnetisch permeablen Bauteil (6) und dem Rotor (3).

5. Motor-Generator nach einem der Ansprüche 1 bis 4, wobei geschmolzenes Aluminium oder Kunstharzmaterial mit Hitzebeständigkeit in alle Lücken zwischen jeweils zwei benachbarten Permanentmagnetstücken (15) wie auch in alle Lücken zwischen benachbarten N-Pol- und S-Pol-Elektromagnet-Magnetpfaden (16, 17) gefüllt ist.

6. Motor-Generator nach einem der Ansprüche 1 bis 5, wobei der Stator (4) umfasst: einen Statorkern (37) mit Statorzähnen (11), die in umlaufender Richtung voneinander beabstandet angeordnet sind, um jeweils zwei benachbarte Statorschlitze (12) voneinander zu trennen, und Wicklungen (8), die mehrere Statorschlitze (12) überspannend auf die Statorzähne (11) gewickelt sind, um im wesentlichen mit gleicher Phase angeordnet zu sein, und wobei die Wicklungen (8) jeweils in mehr als einen Wicklungssatz (1U-1V-1W, 2U-2V-2W, 3U-3V-3W) gruppiert sind, wobei die Wicklungssätze versetzt zueinander angeordnet sind um drei-phasige Stemverbindungen zu bilden, welche entweder in Serie oder parallel angeschlossen werden können, so dass eine Steuerung (25) selektiv zwischen Ausgangsanschlüssen, die aus den Verbindungen (27) aller Wicklungssätze (1U-1V-1W, 2U-2V-2W, 3U-3V-3W) her-ausgeführt werden wechselt, und somit eine gewünschte Ausgangsleistung in Abhängigkeit von der Drehzahl der Rotors (3) erzeugt wird.

7. Motor-Generator nach Anspruch 6, wobei die Wicklungen (8) des Stators (4) in Niederspannungswicklungssätze und Hochspannungswicklungssätze gruppiert sind, und die Steuerung (25) den magnetischen Fluss steuert, um zwei Arten von Leistung mit unterschiedlicher Nennspannung zu erzeugen.

8. Motor-Generator nach Anspruch 7, wobei die Niederspannungswicklungssätze und die Hochspannungswicklungssätze parallel aneinander geschaltet sind, um Erzeugungseigenschaften von niedriger Spannung und hohem Strom zu erzielen.

9. Motor-Generator nach einem der Ansprüche 1 bis 5, wobei die Steuerung (25) in Antwort auf einen Fall, in dem der Motor oder Rotor (3) eine niedrige Drehzahl hat, die aus den Verbindungen (27) herausgeführten Ausgangsanschlüsse seriell miteinander verbindet, und die Anzahl der seriellen Verbindung mit steigender Drehzahl reduziert, um somit sicherzustellen, dass die gewünschte Ausgangsspannung ohne Rücksicht auf Drehzahlschwankungen immer konstant gehalten wird.

10. Motor-Generator nach einem der Ansprüche 6 bis 9, wobei, wenn der Rotor (3) in einem ausgewählten Drehzahlbereich betrieben wird, die Steuerung (25), in Antwort auf einen Fall in dem die Ausgangsanschlüsse angeschlossen sind, um eine niedrige Spannung zu erzeugen, die elektromagnetischen Wicklungen (10) in einer Richtung, in der die N-Pol-Magnetkraft erhöht wird, leitend macht, wohingegen sie, in Antwort auf einen anderen Fall in dem eine hohe Spannung erzeugt wird, die Elektromagnete in einer Richtung, in der die N-Pol-Magnetkraft gesenkt wird, leitend macht, wodurch die gewünschte Ausgangsspannung immer konstant gehalten wird.

11. Motor-Generator nach einem der Ansprüche 6 bis 10, wobei die Steuerung (25) einen Gleichrichter (31), in dem die erzeugte Leistung der gewünschten Spannung zu Gleichstrom gleichgerichtet wird, sowie einen Inverter (29), welcher Wechselstrom einer gewünschten Frequenz bereitstellt, beinhaltet.

12. Motor-Generator nach einem der Ansprüche 6 bis 11, wobei die Steuerung (25) die elektromagnetischen Wicklungen (10) derart leitend macht, dass die magnetische Kraft der Permanentmagnetanordnung (5) reduziert wird, wenn der Motor-Generator als Motor verwendet wird.

## Revendications

1. Moteur-générateur avec un régulateur de tension, comprenant un rotor à aimant permanent multipolaire (3) monté sur un arbre de rotor (2) supporté en rotation dans un logement de stator (1), un stator (4) fixé au logement (1) et agencé autour du rotor (3), et des bobines à électro-aimant (10) fixées aux extrémités opposées axialement du logement (1), chacune à chaque extrémité, en opposition aux extrémités opposées axialement du rotor (3), dans lequel le rotor (3) est composé d'un chemin magnétique cylindrique (7) agencé autour de l'arbre du rotor (2) et s'étendant axialement vers des zones se confrontant avec les bobines à électro-aimant (10), un élément perméable (6) entourant le chemin magnétique cylindrique (7), et un élément d'aimant permanent (5) ayant plusieurs pièces d'aimant permanent (15) s'étendant axialement et agencé circonférentiellement autour de la périphérie externe de l'élément perméable (6), les pôles N et S sur l'une ou l'autre pièce alternant en polarité de façon circulaire autour du rotor (3), et dans lequel le chemin magnétique cylindrique (7) comprend une partie annulaire de pôle N (7N) agencée de sorte à se confronter avec l'une quelconque des bobines à électro-aimant (10), les chemins magnétiques à électro-aimant de pôle N (16) partant de la partie annulaire de pôle N (7N) en opposition aux pôles N des pièces d'aimant permanent (15), une partie annulaire de pôle S (7S) agencée de sorte à se confronter avec une autre des bobines à électro-aimant (10), et les chemins magnétiques à électro-aimant de pôle S (17) partant de la partie annulaire de pôle S (7S) en opposition aux pôles S des pièces à aimant permanent (15), les chemins magnétiques à électro-aimant de pôle N et de pôle S (16, 17) alternant en polarité circonférentiellement, des pièces non magnétiques (34) étant chacune intercalée entre tous les deux chemins magnétiques à électro-aimant adjacents (16, 17).

2. Moteur-générateur construit selon la revendication 1, dans lequel autour de la périphérie externe de l'élément d'aimant-permanent (5), se trouve un premier élément de renfort (13) pour maintenir l'élément d'aimant permanent (5) afin qu'il ne tombe pas du rotor (3) en raison d'une force centrifuge élevée, l'élément de renfort (13) étant constitué de fibres de carbone à haute résistance en un matériau d'âme, qui est imprégné d'aluminium fondu, suivi ensuite par une solidification.

3. Moteur-générateur construit selon les revendications 1 ou 2, dans lequel les deux chemins magnétiques à électro-aimant de pôle N et de pôle S (16, 17) sont encerclés par un second élément de renfort (33) devant être formé selon une configuration cylindrique globale.

4. Moteur-générateur construit selon l'une quelconque des revendications 1 à 3, dans lequel des éléments non magnétiques (18) en un matériau résistant au passage de la force magnétique, tel que l'aluminium, les alliages de cuivre, les matières résineuses et l'acier austénite, sont placés entre toute extrémité (35) du chemin magnétique à électro-aimant de pôle N (16) et la partie cylindrique de pôle S (7S) et également entre toute extrémité (36) du chemin magnétique à électro-aimant de pôle S (17) et la partie cylindrique de pôle N (7N), et un espace entre n'importe quels chemins magnétiques à électro-aimant de pôle N et de pôle S adjacents (16, 17) est rendu en distance qu'une somme d'une lame d'air entre le rotor (3) et le stator (4) et d'un espace entre l'élément perméable magnétique (6) et le rotor (3).

5. Moteur-générateur construit selon l'une quelconque des revendications 1 à 4, dans lequel de l'aluminium fondu ou une matière résineuse ayant une propriét é thermorésistante est placé dans tout espace entre deux quelconques pièces d'aimant permanent adjacentes (15) et également tout espace entre n'importe quels chemins magnétiques à électro-aimants de pôle N et de pôle S adjacents (16, 17).

6. Moteur-générateur construit selon l'une quelconque des revendications 1 à 5, dans lequel le stator (4) est composé d'un noyau de stator (37), les dents de stator (11) étant agencées circonférentiellement à distance les unes des autres pour séparer deux encoches de stator adjacentes (12), et les enroulements (8) enroulés sur les dents du stator (11) en écartant certaines encoches de stator (12) de telle sorte à obtenir un déphasage sensiblement égal, et dans lequel les enroulements (8) sont chacun groupés en plusieurs ensembles d'enroulement (1U-1V-1W, 2U-2V-2W, 3U-3V-3W) décalés les uns des autres pour former des couplages en étoile triphasés, qui peuvent être connectés soit en série soit en parallèle, de telle sorte qu'un régulateur (25) change de façon sélective parmi les bornes de sortie partant des connexions (27), chaque ensemble d'enroulement (1U-1V-1W, 2U-2V-2W, 3U-3V-3W), produisant ainsi une puissance de sortie désirée selon un régime du rotor (3).

7. Moteur-générateur construit selon la revendication 6, dans lequel les enroulements (8) du stator (4) sont groupés en ensembles d'enroulement basse tension et en ensembles d'enroulement haute tension, et le régulateur (25) régule le flux magnétique pour produire deux types de puissances, qui ont une tension nominale différente.

8. Moteur-générateur construit selon la revendication 7, dans lequel les ensembles d'enroulement basse tension et les ensembles d'enroulement haute tension sont connectés en parallèle pour donner une caractéristique de génération de courant de forte intensité et de basse tension.

9. Moteur-générateur construit selon l'une quelconque des revendications 6 à 8, dans lequel le régulateur (25) sert à connecter en série les bornes de sortie partant des connexions (27) en réponse à un événement dans lequel le moteur ou le rotor (3) a un faible régime, et à réduire le nombre des connexions réalisées en série lorsque le régime augmente, permettant ainsi de garantir que la tension de sortie souhaitée reste toujours constante indépendamment d'une variation du régime.

10. Moteur-générateur construit selon l'une quelconque des revendications 6 à 9, dans lequel avec le rotor (3) fonctionnant dans une plage de régime prédéfinie, le régulateur (25) en réponse à l'événement dans lequel les bornes de sortie sont connectées pour fournir la sortie de basse tension, rend les bobines à électro-aimant (10) conductrices dans une direction pour augmenter la force magnétique de pôle N, tandis qu'en réponse à un autre événement dans lequel la sortie présente une tension élevée, rend les électro-aimants conducteurs dans une direction inverse pour réduire la force magnétique de pôle N, permettant ainsi de garder la tension de sortie souhaitée toujours constante.

11. Moteur-générateur construit selon l'une quelconque des revendications 6 à 10, dans lequel le régulateur (25) comprend un rectificateur (31) dans lequel une puissance produite de la tension souhaitée est rectifiée à un courant continu, et un inverseur (29) produisant un courant alternatif d'une fréquence souhaitée.

12. Moteur-générateur construit selon l'une quelconque des revendications 6 à 11, dans lequel le régulateur (25) rend les bobines à électro-aimant (10) conductrices de manière à réduire la force magnétique de l'élément à aimant permanent (5) lorsque le moteur-générateur est utilisé en tant que moteur.
